# DEMANDE DE BREVET EUROPEEN

(11) **EP 1 045 304 A1**
(43) Date de publication de la demande: **18.10.2000**
(21) Numéro de dépôt: 99400939.7
(22) Date de dépôt: 16.04.1999
(51) Int. Cl.: G06F 9/44

(54) **Procédé de pilotage d'un processus décisionnel lors de la poursuite d'un but dans un domaine d'application déterminé, tel qu'économique, technique organisationnel ou analogue et système pour la mise en oeuvre du procédé**

(71) Demandeur: Naillon, Martine, 92330 Sceaux (FR)
(72) Inventeur: Naillon, Martine, 92330 Sceaux (FR)
(74) Mandataire: Thinat, Michel

(57) **Abrégé**

La présente invention concerne un procédé de pilotage d'un processus décisionnel lors de la poursuite d'un but dans un domaine d'application déterminé, tel qu'économique, technique, organisationnel ou analogue et système pour la mise en oeuvre du procédé.

Le procédé est caractérisé en ce qu'il est automatisé par la mise en relation selon des règles et des stratégies prédéterminées en fonction du but global d'au moins un objet de connaissances reflétant un point de vue du domaine d'application et comportant une information interprétée comme un indice d'alarme pour déclencher le processus décisionnel, avec d'autres objets de connaissances reflétant d'autres points de vue ou d'autres compétences fonctionnelles du même domaine d'application ou d'autres domaines.

L'invention s'applique dans le domaine de l'informatique partagée, la gestion des connaissances et l'aide à la décision.

## Description

La présente invention concerne un procédé de pilotage d'un processus décisionnel lors de la poursuite d'un but dans un domaine d'application déterminé, tel qu'économique, technique, organisationnel ou analogue et un système pour la mise en oeuvre du procédé.

Actuellement, dans le domaine de la gestion des connaissances la collecte d'informations relatives à des connaissances provenant de sources internes ou externes, telles qu'Intranet ou Internet, et leurs échanges entre différents services organisés pour les analyser et prendre des décisions dans un but poursuivi prédéterminé, nécessitent systématiquement l'intervention des personnes ou utilisateurs des services considérés.

Cette procédure connue de traitement d'informations a pour inconvénient d'être peu souple d'utilisation puisqu'elle nécessite obligatoirement la présence et l'intervention d'utilisateurs pour l'analyse et l'échange des connaissances et pour les prises de décision et de ne pas utiliser systématiquement l'ensemble des connaissances personnelles et/ou collectives disponibles.

La présente invention a pour but d'éliminer les inconvénients ci-dessus des systèmes connus en proposant un procédé de pilotage d'un processus décisionnel lors de la poursuite d'un but global dans un domaine d'application déterminé, tel qu'économique, technique, organisationnel ou analogue, et qui est caractérisé en ce qu'il est automatisé par la mise en relation, selon des règles de but et de stratégie prédéterminées en fonction du but global, d'au moins un objet de connaissance reflétant un point de vue du domaine d'application et comportant une information interprétée comme un indice d'alarme pour déclencher le processus décisionnel, avec d'autres objets de connaissances reflétant d'autres points de vue ou d'autres compétences fonctionnelles du même domaine d'application ou de différents domaines, mettant en oeuvre le déroulement du processus décisionnel.

Selon une caractéristique de l'invention, on crée un réseau d'agents de traitement d'informations, comportant des agents créateurs d'objets de connaissance et des agents constructeur d'objets de connaissance par ajout aux objets de connaissance créés d'éléments de connaissance supplémentaires, obtenus par une mise en relation avec d'autres objets de connaissance.

Selon une autre caractéristique, on crée le réseau sous forme d'une structure hiérarchisée en fonction du but précité, chaque agent comportant une base de règles, une base de stratégies et une base de buts individuels, les agents créateurs constituant les noeuds terminaux du réseau.

Selon encore une autre caractéristique, les agents sont organisés en boucles, chacune comportant un agent maître et au moins un agent fils, un agent fils pouvant être un agent maître d'une boucle d'un niveau inférieur du réseau, les boucles terminales du réseau étant formée par des boucles d'analyse d'objets de connaissance comportant un agent maître analyseur et des agents créateur d'objets de connaissance, les objets de connaissance se construisant lors de leur déplacement dans la structure du réseau vers le sommet de celui-ci.

Selon une autre caractéristique, la structure du réseau est obtenue par une décomposition successive de processus à partir du but global en stratégies et buts individuels, la stratégie d'un niveau n d'agents devenant le but d'agents de niveau inférieur n-1.

Selon une autre caractéristique, le processus décisionnel est décomposé en étapes décisionnelles génériques, appelées invariants cognitifs, qui se propagent sous forme de but et de stratégies de niveau en niveau dans la structure.

Selon encore une autre caractéristique, le réseau est construit selon une configuration fractale.

Selon encore une autre caractéristique, pour une application donnée on détermine la structure des boucles d'agents en se référant à un agent de structuration des services de la boucle et un agent de structuration des connaissances pour chaque service créé.

Le système pour la mise en oeuvre du procédé est caractérisé en ce qu'il est formé par un réseau d'agents en forme d'une pyramide dont le sommet constituant le niveau n est formé par un agent maître auquel est associé un certain nombre d'agents fils formant le niveau n-1, chaque agent fils pouvant être un agent maître d'un certain nombre d'agents fils constituant un niveau inférieur, la base de la pyramide étant formée par des agents analyseurs dont chacun est pourvu d'un certain nombre d'agents cognitifs créateurs d'objets de connaissance.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 représente la structure hiérarchisée d'un réseau d'agents de création d'objets de connaisances et d'agents constructeurs d'objets de connaissances, pour la mise en oeuvre du procédé de pilotage d'un processus décisionnel de l'invention ;
- Les figures 2,3 et 5 illustrent trois exemples de structuration des connaissances sous forme d'arbres de concept ;
- les figures 4 et 6 illustrent schématiquement la création et la construction des objets de connaissance dans le cadre de l'invariant cognitif 1 et de l'invariant cognitif 2.

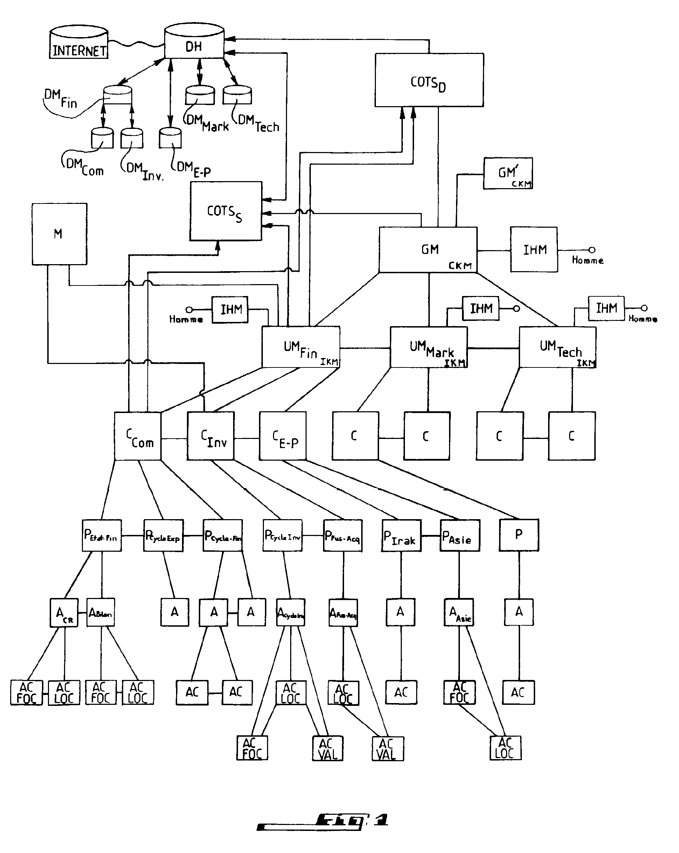

La figure 1 montre le principe de la structure d'un système de pilotage d'un processus décisionnel lors de la poursuite d'un but dans un domaine d'application déterminé, tel qu'économique, technique, organisationnel ou analogue.

Le système se présente sous forme d'un réseau d'une multitude d'agents de traitement d'informations organisés, dans une structure hiérarchisée en forme d'une pyramide, en boucles dont chacune comporte un agent maître et au moins un agent fils, ce dernier constituant l'agent maître d'une boucle d'un niveau inférieur.

Plus précisément, la pyramide sur la figure 1 comporte au sommet formant le niveau n un agent maître de groupe GM auquel sont associés dans l'exemple représenté trois agents fils, appelés agents utilisateurs maîtres UM qui forment le niveau inférieur n-1. Chaque agent UM pilote un certain nombre d'agents canal C formant le niveau n-2. A chaque agent C est associé au moins un agent de piste P alors du niveau n-3. Chaque agent P dispose d'au moins un agent d'analyse A du niveau n-4. A chaque agent d'analyse A sont associés un ou plusieurs agents appelés agents cognitifs AC qui ont pour fonction de capter ou détecter des informations contenues dans la scène représentative de l'application considérée, qu'ils observent.

La figure 1 montre un système entièrement structuré. Il est à noter qu'un but global pourrait ne pas nécessiter tous les agents présentés. L'exemple qu'on donnera plus loin se contente d'un réseau plus limité. Sur la figure 1, les agents réellement utilisés sont indiqués par des termes en indice. Cependant, comme il sera aussi expliqué plus loin, une des particularités essentielles de l'invention réside dans le fait que le système se structure lui-même au fur et à mesure que le processus décisionnel progresse, sous forme d'une séquence d'opérations se déroulant selon des règles de but, de stratégie et de plan d'action, qui sont prédéterminés et adaptables par l'utilisateur, mais choisis pour l'accomplissement d'une opération en fonction des résultats des opérations précédentes. A cette fin, chaque agent lors de la structuration des boucles est pourvu, pour lui permettre d'accomplir sa fonction dans le processus décisionnel dans le cadre de la poursuite du but global, de règles de but, de stratégie ou de plan d'action.

De façon générale le processus décisionnel se décompose en étapes décisionnelles, appelées invariants cognitifs. A chaque étape décisionnelle, le but global est décomposé en stratégies et en buts individuels qui se propagent dans le réseau de haut en bas.

Plus précisément, la structuration des agents se fait d'un niveau de la pyramide au niveau inférieur par décomposition successives du but global, pour chaque étape décisionnelle, en stratégies et but individuels, la stratégie d'un niveau d'agents donnés devenant le but des agents du niveau inférieur. Le réseau en forme de pyramide présente alors la configuration fractale représentée, dans la mesure où chaque boucle se reproduira structurellement de niveau en niveau.

Pour que le réseau puisse se construire de cette manière en fonction d'un but global, le système selon l'invention comporte des agents de structuration des services et des données appelés respectivement COTS_{S} et COTS_{D}. L'agent de structuration des services COTS_{S} est conçu pour pouvoir déterminer les services qui sont à la disposition d'un agent maître de niveau i, qui constitueront les agents de niveau i-1, et qui sont nécessaires pour la contribution à la réalisation du but global et des buts individuels, selon des règles prédéterminées. En fonction des services nécessaires pour la mise en oeuvre d'un but et des services qui sont disponibles, l'agent de structuration organisera les services des boucles. L'agent de structuration de données enverra à chaque service les données qui sont nécessaires pour l'accomplissement de la fonction octroyée. Les données sont stockées dans un entrepôt de données DH sous forme de paquets de données structurées multimédia, numériques, textuelles, images, sons, ..., qui sont structurées en fonction des services de l'agent de structuration de services. L'entrepôt est un réservoir de connaissances multimédia, capitalisées par exemple sur des serveurs privés du type Intranet ou Extranet, qui sont reliés en permanence au réseau de communication Internet de façon qu'ils puissent acquérir des données dont ils ne disposent pas, et ainsi mettre continuellement à jour les informations qui vont être utilisées pour la réalisation du but.

Le système selon l'invention comporte encore un dispositif de mémoire M de services et de données, qui est en mesure de mémoriser la structure d'un réseau qui a été construit auparavant pour la poursuite d'un but global. Grâce à cette mémoire, l'invention permet la reconstruction rapide d'un réseau auparavant établi pour le même but global. Pendant la réalisation d'un but global, la mémoire M stocke toutes les données structurées correspondant à chaque agent.

Il est encore à noter que l'invention permet notamment au niveau de l'agent maître de groupe GM et des agents utilisateurs UM, d'interagir avec l'extérieur par l'intermédiaire d'une interface homme-machine IHM. En particulier, l'homme, le cas échéant, en se substituant aux COTS, peut, à tout moment, entrer de nouveaux services, c'est-à-dire de nouvelles règles, et de nouvelles données. Ces interventions de l'homme et les modifications au déroulement du processus décisionnel qu'elles entraînent seront prises en considération par les agents de structuration et mémorisées.

Le réseau d'agents en forme d'une pyramide d'agents représenté se compose de deux parties verticales dont la ligne de partage passe entre les agents piste P et les agents d'analyse A. Les boucles d'analyse comportant les agents d'analyse et leurs agents cognitifs associés ont pour fonction de créer des objets de connaissance alors que les agents des niveaux supérieurs enrichissent les objets de connaissance comme on le décrira plus loin. Ces agents sont appelés agents constructeurs. Le nombre des niveaux d'agents constructeurs est fonction du but global à réaliser.

Le réseau d'agents se compose également de N parties horizontales, selon des lignes de partages qui séparent les agents UM entre eux. Chaque agent UM et ses agents de service associés correspondent à un utilisateur et à une machine individuelle dite IKM. L'agent GM fédère, par exemple via l'Internet ou l'Intranet, plusieurs machines IKM, constituant une machine collective dite CKM, destinées à une collectivité d'utilisateurs en réseau.

Pour faire apparaître clairement les particularités de l'invention, on décrira ci-après à titre d'exemple non limitatif le processus de structuration des agents constructeurs et créateurs d'objets de connaissance, dont doit disposer une entreprise pour assurer un suivi budgétaire, la synthèse des décisions individuelles étant réalisées par chaque agent maître UM sur la figure 1, qui est également le gestionnaire de connaissances individuelles de chaque machine IKM, et la synthèse des décisions collectives étant réalisée par un agent maître GM sur la figure 1 qui est également le gestionnaire de connaissances collectives CKM. Les gestionnaires de connaissances UM et GM interagissent avec l'extérieur, par l'intermédiaire d'interfaces homme-machine IHM, une machine individuelle formant l'agent gestionnaire utilisateur maître UM sur la figure 1 et ses agents associés et une machine collective formant l'agent groupe maître GM et ses machines IKM associées. Le suivi budgétaire qui constitue le but global sus-mentionné comporte plusieurs étapes décisionnelles, appelées invariants, à savoir ci-après la détection automatique indices d'alarme et la validation de ces indices.

Lors de la formulation du but global, l'homme indique au gestionnaire de connaissances collectives CKM, par l'intermédiaire de son interface IHM, les modalités qui doivent être prises en considération, telles que dans le présent exemple la condition "rapide et faible coût" appelée ci-après cond.1, l'état de la machine, les indications concernant la structure source d'où seront extraites les données, et le profil du gestionnaire collectif. Chaque utilisateur individuel indique au gestionnaire de connaissances individuelles IKM, son profil, par l'intermédiaire de son interface IHM individuelle. L'état du système pourrait être l'état initial ou celui obtenu après reconfiguration en fonctionnement à la suite d'une intervention sur un gestionnaire CKM ou IKM.

Les règles de but et de stratégie selon lesquelles se déroule l'établissement du réseau sont données dans l'Annexe I, mais la description qui suit explicitera leurs applications dans le but choisi du suivi budgétaire.

La règle de but générique de l'agent GM détermine pour le but global formulé, avec les modalités assorties, la stratégie générique 1 qui se décompose en stratégies 1.0 ; 1.1 et 1.2. La stratégie 1.0 a pour fin la structuration des services, la stratégie 1.1 la structuration des données et la stratégie 1.2 la détection d'indices (invariant 1).

Il est à noter que les règles de but et de stratégie comportent toujours l'indication de l'invariant et des modalités pour que l'agent auquel le message est adressé puisse correctement accomplir sa fonction, comme on le voit à l'annexe I. Pour simplifier, les indications ne sera plus mentionnées ci-après sauf si cela apparaît nécessaire.

En application de la règle de stratégie 1.0, l'agent GM adresse à l'agent de structuration des services COTS_{S} un message "but 1 = strate 1.0 (but global, GM) = structuration de services de GM pour réaliser le but global". Cet agent, en réponse au message recherche dans sa mémoire, ou interroge un serveur externe, les services qui sont nécessaires et disponibles pour le but global.

Dans l'exemple de but choisi (suivi budgétaire), trois services sont disponibles, à savoir les services FINANCIER, MARKETING, TECHNIQUE. L'agent de structuration des services les envoie à l'agent GM qui doit alors créer les utilisateurs maîtres financier, marketing et technique appelés UM_{fin}, UMₘₐᵣₖ, Um_{tech}, mettre fin à la stratégie 1.0 et mettre maintenant en oeuvre la stratégie 1.1. Selon cette règle définie par :
si strat = strat 1.1
si service = service 1 (service_{fin};serviceₘₐᵣₖ ; service_{tech}), et si structure = DH
l'agent GM doit envoyer le message de but "but 1 = strat 1.1 (but global ; service 1)" à l'agent de structuration de données COTS_{D} qui, en réponse, transmet les données sous forme de paquets de connaissances structurées correspondant aux services, à savoir les paquets de données structurés DM_{fin}, DMₘₐᵣₖ, DM_{tech} extraits de l'entrepôt de stockage des connaissances structurées DH. Dans l'exemple choisi, les connaissances sont structurées sous forme d'arbre de concept. D'autres modes de structuration sont utilisables. Après la réception des paquets de données structurées, l'agent GM met fin à la stratégie 1.1 et met en oeuvre la stratégie 1.2.

Selon la règle de cette étape du processus définie par
si strat = strat 1.2
si structure = DM_{fin}, DMₘₐᵣₖ, DM_{tech}
l'agent GM envoie à l'agent utilisateur UM_{fin} le message de but "but = strat 1.2 = détection indices".

L'agent UM_{fin} possède des règles de but et de stratégie qu'il met en oeuvre pour accomplir sa fonction dans le cadre défini par le but global. En application de sa règle de but
si but = détection indices et si structure = DM_{fin}
il procède à la structuration de la boucle dont il est le maître.

Cette structuration se déroule à nouveau selon des règles de stratégie 1.0 ; 1.1 et 1.2 en trois étapes successives, comme cela a été décrit à l'occasion de la structuration de la boucle de l'agent GM.

Selon la règle de stratégie 1.0, l'agent UM_{fin} envoie le message de but 1 = strat 1.0 à l'agent de structuration des services du gestionnaire de connaissances individuelles IKM qui constitue l'agent UM. L'agent de structuration établiera que, pour le but global avec les modalités assorties, l'agent UM_{fin} peut disposer des services C_{com}, Cᵢₙᵥ et cₑ₋ₚ, c'est-à-dire des services comptabilité, investissements et économie-politique. On constate qu'à ce niveau de la structuration s'ajoute aux deux services d'ordre financier, le service économie-politique, un service se situant hors du domaine purement financier, apportant donc un point de vue différent.

Bien entendu, l'ajout de ce nouveau service pourrait également s'effectuer par l'intermédiaire de l'homme agissant sur l'agent UM_{fin} via l'interface IHM. Cette configuration de la boucle avec le service cₑ₋ₚ sera stockée dans la mémoire M et dans le COTSₛ, ce qui constitue un enrichissement des COTSₛ par l'intervention humaine et illustre la flexibilité et l'adaptabilité du système.

Après la création des services sus-mentionnés dans la boucle pilotée par l'agent UM_{fin} et après la fin de la stratégie 1.0, et en application de la règle de stratégie :
si strat = strat 1.1 (but global), et
si service = C_{com}, cᵢₙᵥ, cₑ₋ₚ = service 1, et
si structure = DM_{fin}
⇒ envoyer but 1 = strat 1.1 (but global, service 1) à COTS_{D}.

L'agent de structuration de données COTS_{D} enverra à l'agent UM_{fin} les paquets de données numériques, textuelles et images ou analogue correspondant au services sus-mentionnés, à savoir les DM_{com}, DMᵢₙᵥ et DMₑ₋ₚ, les DM_{com} et DMᵢₙᵥ étant extraits des DM_{fin} et les DMₑ₋ₚ étant extraits de l'entrepôt de données DH. Puis, l'agent UM_{fin} met fin à la stratégie 1.1. et met en oeuvre maintenant la stratégie 1.2 selon la règle de stratégie.
si strat = strat 1.2
si structure = DM_{com},DMᵢₙᵥ, DMₑ₋ₚ
⇒ envoyer but = strat 1.2 = détection indices par canal, à l'agent canal C_{com} et à l'agent canal Cₑ₋ₚ.

Après la structuration de la boucle pilotée par l'agent UM_{fin} et comportant les agents canal C_{com}, Cᵢₙᵥ et Cₑ₋ₚ dont seulement les agents C_{com} et Cₑ₋ₚ seront utilisés pour l'invariant 1, il convient de structurer la boucle de chacun des deux agents C_{com} et Cₑ₋ₚ.

Cette structuration se fait selon les règles de but et stratégies assorties à chacun des deux agents. Le but de chaque agent est la stratégie 1.2 de l'agent UM_{fin}, c'est-à-dire la détection d'indices par canal. Les règles de stratégie sont les trois règles de stratégies 1.0, 1.1 et 1.2. Comme auparavant, les stratégies 1.0 et 1.1 assurent la structuration des services et l'attribution à chaque service d'un paquet de données approprié.

Ainsi sont créés par l'agent canal C_{com} les agents piste destinés aux états financiers, aux cycles d'exploitation et aux cycles de financement, appelés ci-après P_{etat fin}, P_{cycl exp} et P_{cycle fin}, avec les paquets de données appropriés DM_{etat fin}, DM_{cycl exp} et DM_{cycle fin}, qui ont été extraits par les agents COTS_{D} du paquet DM_{com}. La règle de stratégie 1.2 amène l'agent C_{com} à envoyer le message de stratégie strat 1.2 = détection d'indice par piste à l'agent P_{état fin}, à titre de but à mettre en oeuvre.

En application des règles de stratégie 1.0 et 1.1, l'agent canal Cₑ₋ₚ créé les agents piste destinés à l'Irak et à l'Asie et appelés P_{Irak} et P_{Asie}. La règle 1.2 amène l'agent Cₑ₋ₚ à envoyer le message de stratégie strat 1.2 = détection d'indice par piste, à l'agent P_{Asie} à titre de but à mettre en oeuvre.

La prochaine étape est la structuration de la boucle de chaque agent piste selon des règles de but et de stratégie. La règle de but étant
si but = but local 1 = détection indices par piste avec les modalités assorties, il convient d'appliquer la règle de stratégie strat = strat 1.0 qui indique à l'agent-piste de choisir le nombre des agents d'analyse A et, selon la stratégie 1.1, celui-ci envoie aux agents d'analyse le but à réaliser, à savoir le message de but
but = strat 1.1 = recherche indices d'alarme.

En procédant ainsi, l'agent de piste P_{état fin} crée des agents d'analyse compte-résultat A_{cr} et bilan A_{bilan} et les connaissances DM_{CR} + DM_{bilan}. L'agent piste_{Asie} crée un seul agent analyseur, à savoir l'agent A_{Asie} avec DM_{Asie}.

Chaque agent analyseur travaille en fonction de règles de but et de plan d'action. De façon générale, ces règles sont comme suit :
- Règle de but :: si but = but local 1 = recherche indices d'alarme
⇒ appliquer plan = plan 1.
- Règle de plan :: si plan = plan 1
⇒ créer N agents cognitifs (en fonction de la condition 1)
⇒ appliquer plan 1 aux agents cognitifs.

Dans l'exemple présent du suivi budgétaire comme but global, seulement l'agent A_{CR} est utilisé et cet agent analyseur crée deux agents cognitifs, à savoir un agent de focalisation FOC qui est un détecteur de signaux faibles dans la scène établie par DM_{CR} et un agent de localisation LOC de détection de branches de concept. En application du plan 1, l'agent analyseur adresse à l'agent FOC la requête de rechercher des signaux faibles dans la scène appropriée. Après la détection d'un signal faible à retenir, considéré comme objet de connaissance Oᵢ, l'agent FOC adresse une requête à l'agent LOC pour que celui-ci établisse le contexte dans lequel se situe l'objet Oᵢ, ce contexte constituant alors un autre objet de connaissance Oⱼ. Après le retour de la requête à l'agent FOC avec le résultat, cet agent renvoie l'objet Oᵢ enrichi par la mise en contexte selon Oⱼ à l'agent analyseur.

Les objets de connaissances ont la structure prédéterminée présentée ci-après et comportent un certain nombre de champs. Chaque champ présente un aspect de l'objet de connaissance. Les termes figurant entre parenthèses sont quelques exemples donnés pour illustrer la nature du champ considéré.
→ ID (identité)
→ Type (Ex : indice, point d'appui, point de repère, objet reconnu...)
→ Contexte (Ex.: Sujet du paragraphe, environnement géographique d'un objet dans une image...)
→ Formes (par créateur de forme) (Ex.: Paragraphe, créateur LOC ; Mot, créateur FOC...)(type : élémentaire ou composite) (Ex.: arbre, branche, doc, éléments d'images, valeur numérique)
→ Propriété (Ex.: Zone à risque, zone stratégique, zone sous-surveillance, écart valeur numérique...)
→ Utilisation (Ex.: Nom de contenu, Nom d'une techno, d'un concurrent, d'un partenariat...)
→ Liens (par créateur de lien) (avec un type)
→ Média (Image, texte, son)
→ Alarme
→ Source
→ Créateur(FOC, LOC,...)

Les liens entre objets de connaissances sont de différents types :
→ Contenu dans
→ Issu de
→ Proche physiquement (dans un texte ou une image)
→ Proche sémantiquement (synonyme, expression identique...)
→ Associé logiquement.
→ Attraction forte, faible,...

Plus précisément, la génération des objets de connaissances par un agent cognitif se fait en application de règles de savoir-faire. Les règles de l'objet FOC sont les suivantes :
si but = recherche signaux faibles, et
si structure = DM_{CR}, par exemple constituée de valeurs numériques issues d'un progiciel de gestion intégré de comptabilité
⇒ utiliser savoir faire 1 = calculer signaux du "tableau de bord"
⇒ utiliser savoir faire 2 = détection signaux d'alarme dans valeurs numériques sources
⇒ Si amplitude signaux supérieure à seuil créer O₁ tel que :
   → Id
   → Type (indice)
   → Créateur (FOC)
   → Forme (type squelette, créateur FOC, structure DM_{CR} forme = valeur numérique ΔX, média = valeurs numériques sources)
   → Propriété (écart Tableau de Bord)
⇒ envoyer message d'établissement de contexte de O₁ à agent LOC dans DM_{CR}.

Le calcul des signaux du tableau de bord consiste à établir les valeurs des paramètres actuels de l'activité économique de la société dans la structure de données DM_{CR} et à les comparer aux paramètres de consigne qui doivent être respectés. Les résultats ΔX de cette comparaison forment les signaux sus-mentionnés. Si, parmi les signaux ainsi établis, certaines valeurs de signaux sont supérieures à un seuil prédéterminé, l'agent cognitif FOC crée l'objet de connaissance O₁ représentatif d'indice d'alerte.

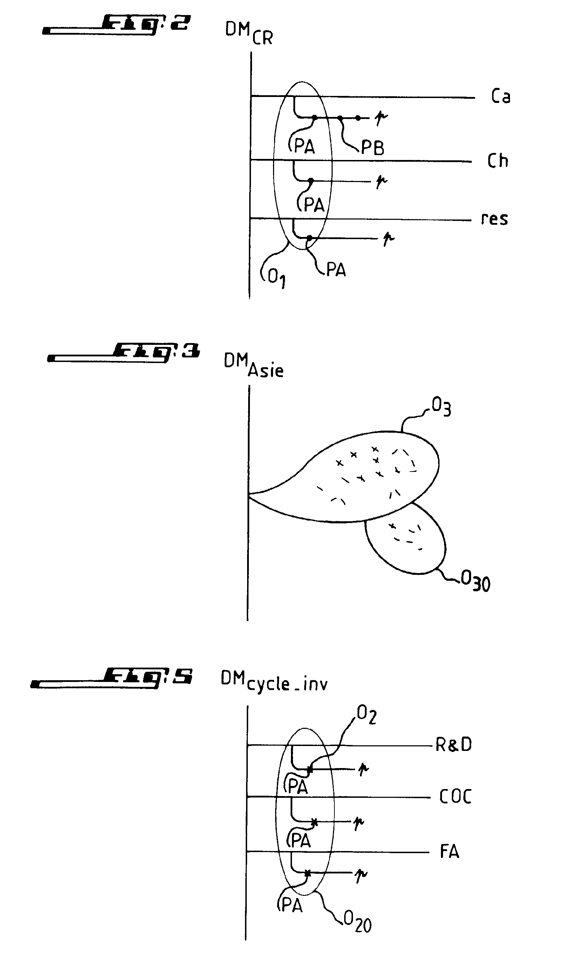

On expliquera ci-après la façon de procéder de l'agent cognitif FOC en se référant à la figure 2 qui montre la structure des connaissances contenues dans le paquet de connaissance DM_{CR}. La structure de ces données est représentée sous forme d'images dont la première représente les comptes de résultat sous forme d'un arbre de concept. La structure sous forme d'un arbre de concept est connue en soi. La figure 2 permet d'expliciter certains termes utilisés pour les objets de connaissance. L'arbre représenté comporte un certain nombre de branches dont trois sont indiquées et représentent les chiffres d'affaire ca, les charges ch et les résultats res. A chaque branche est rattaché un certain nombre de sous-branches dont seulement une est montrée. Celle-ci désignée par P concerne les produits commercialisés par la société procédant au suivi budgétaire. Ces produits sont représentés sur les sous-branches par des points PA, PB... . Il est à noter que sur l'image représentée, chaque produit est identifiable par les coordonnées du point qu'il représente sur l'image.

En appliquant les première et seconde règles de savoir-faire, l'agent FOC établit dans les données sources de la structure des connaissances DM_{CR} les signaux d'alerte significatifs, se situant au-dessus du seuil de référence. Les points, qui dans l'arbre de concept DM_{CR} sont représentatifs des signaux d'alerte retenus, seront différenciés de l'environnement, par exemple éclairés, par l'agent cognitif FOC. Sur la figure 2, un point est allumé sur la sous-branche p des branches ca, ch et res. Ce sont ces signaux retenus qui donnent lieu à la création par l'agent FOC de l'objet de connaissance O₁. Cet objet est du type indice, a été créé par l'agent FOC et présente une forme dite en "squelette", c'est-à-dire qu'il est formé par des points rares jusqu'à présent non reliés. Sa propriété est que les indices sont des valeurs numériques dans les données sources. Dans la structure de l'objet de connaissance O₁, les champs type, créateur, forme et propriété sont donc déjà définis lors de la création de l'objet.

Puis, conformément aux règles de l'agent FOC, lorsqu'un objet O₁ a été créé, l'agent adresse un message de demande d'établissement du contexte de l'objet O₁ à l'agent cognitif LOC. Pour exécuter cette requête, l'agent LOC applique les règles de savoir-faire et de création de contexte génériques suivantes :
Si but = établir contexte, si structure = DM_{CR}
⇒ utiliser savoir-faire 1 = Détection contour de branche de concept par propriété commune (qui détecte une branche qui contient O₁)
⇒ S'il existe une propriété commune aux points définissant la forme de O₁, définir une branche comme étant le contexte de l'objet O₁ et créer O₇
   → Id
   → Type (objet reconnu)
   → Créateur LOC A_{CR}
   → Forme (type zone, créateur LOC, Structure = DM_{CR},forme = branche de concept, index, média = arbre de concept
   → Utilisation (produit A)
   → Relié à O₁ (créateur LOC, type = contenu dans)
⇒ Mettre à jour O₁ tel que δ¹O₁
   → Contexte (produit A)
   → Relié à O₇ (créateur LOC, type = contexte de)
   → cat = 1 (un objet indice de catégorie 1 est contenu dans son contexte)
⇒ faire retour à FOC (O₇, δ¹O₁)

En application de ces règles, la fonction de l'agent LOC consiste à rechercher si les points différenciés sur la figure 2 présentent au moins une caractéristique commune. En se reportant aux données sous-jacentes à l'image de l'arbre, l'agent LOC constate que les trois points différenciés ou allumés sur la figure 2a sont représentatifs du produit PA. Ce produit se révèle ainsi constituer le contexte dans lequel se situe l'objet O₁. L'agent LOC créé par conséquent l'objet O₇ spécifié ci-dessus et met à jour l'objet O₁ en créant δ¹O₁. Puis l'agent LOC renvoie à l'agent FOC, les objets O₇ et δ¹O₁.

L'agent FOC applique alors la règle de création de signaux faibles suivant :
Si but = recherche de signaux faibles (plan 1), si retour de demande d'établissement de contexte (O₁) = (δ¹O₁, O₇),
⇒ Réaliser l'inférence suivante : Si forme (O₁) = valeur numérique ΔX> seuil 1, si contexte (O₁) = Produit PA, alors mise à jour de O₁ tel que δ²O₁
   → intérêt = 1
⇒ faire retour à agent A_{CR} (O₁^{δ1+δ2},O₇) et mettre fin à plan 1.

Autrement dit, l'agent FOC, après la réception de la réponse à sa requête d'établissement de contexte, met à jour l'objet O₁, dans les conditions spécifiées plus haut en ajoutant à l'objet O₁^{δ1}, c'est-à-dire mis à jour par l'agent LOC, l'élément δ² qui indique que l'objet O₁ présente un intérêt = 1. Dans la structure de l'objet O₁ apparaît le champ intérêt = 1. Après cette mise à jour de l'objet O₁ par adjonction des éléments δ¹ et δ², celui-ci est renvoyé à l'agent analyseur A_{CR} dans sa version enrichie O₁ ^{δ1+δ2} , accompagné des objets qui ont été créés à cette occasion, c'est-à-dire O₇.

Le déplacement avec, le cas échéant, mise à jour des objets de connaissance, à l'agent GM au sommet de la pyramide se fait selon des règles de retour et de mise à jour, qui sont propres aux différents agents se trouvant sur le parcours des objets. Ces règles sont fonction bien entendu de l'invariant qui est mis en oeuvre dans le but global et les modalités assorties.

Ces règles dans l'exemple du suivi budgétaire se résument de la manière suivante :

### Règle de l'agent analyseur : A

Si but = recherche indices, si fin plan 1 (O₁^{δ1+δ2},O₇),
si intérêt (O₁ ^{δ1+δ2}) = 1, si type (O₁ ^{δ1+δ2}) = indice
⇒ faire δ³ O₁^{δ1+δ2}
   → alarme = 1
⇒ faire O₁ ^{δ1+δ2+δ3}
⇒ retour au père de (O₁ ^{δ1+δ2+δ3},O₇)

### Règle des agents P, C

Si but = détection indices par piste (ou par canal) et si retour de but = (O₁ ^{δ1+δ2+δ3}, O₇)
⇒ copie (O₁ ^{δ1+δ2+δ3},O₇)
⇒ Retour au père de (O₁^{δ1+δ2+δ3},O₇)

### Règle de l'agent UM

Si but = détection indice, si retour but = (O₁ ^{δ1+δ2+δ3},O₇)
⇒ afficher (O₁^{δ1+δ2+δ3},O₇) à l'IHM de l'IKM dans structure qui se trouve dans le champ Forme

### Règle de l'agent GM

Si but = but global, si retour de strat 1.2 = (O₁^{δ1+δ2+δ3},O₇)
⇒ faire copie (O₁^{δ1+δ2+δ3},O₇)
⇒ afficher (O₁^{δ1+δ2+δ3},O₇) à l'IHM du CKM.

Conformément à ces règles, l'agent analyseur A_{CR} associe à l'objet O₁^{δ1+δ2} dont il a été reconnu qu'il présente un intérêt et qui est du type indice, l'élément δ³ qui indique que l'objet O₁ doit être considéré comme impliquant une alarme. L'agent analyseur met à jour l'objet O₁ en établissant O₁ ^{δ1+δ2+δ3} . L'agent analyseur a également reçu l'objet de connaissance O₇ et transmet les objets mis à jour O₁^{δ1+δ2+δ3} et O₇ à l'agent piste P_{état-fin}.

Puis ces deux objets O₁^{δ1+δ2+δ3} et O₇ remontent à l'agent GM sans autre modification en passant par les agents piste P puis canal C et utilisateur UM_{fin}. Dans l'agent utilisateur maître UM_{fin}, les objets de connaissance sont affichés à l'interface Homme-Machine IHM du gestionnaire de connaissances individuelles IKM. Dans l'agent groupe maître GM, les objets sont également affichés à l'interface Homme-Machine IHM du gestionnaire de connaissances collectives CKM.

Après avoir décrit la création et la construction des objets de connaissances O₁ et O₇ par les agents FOC et LOC de l'agent analyseur A_{CR} et leur remontée à l'agent GM, on décrira ci-après le travail à effectuer par les agents de focalisation FOC et de localisation LOC de l'agent analyseur A_{Asie} en application des règles de stratégie et de plan qui ont été exposées plus haut de façon générale. L'agent FOC est un agent de détection de densité dans un arbre de concept et il agit selon les règles suivantes :
Si but = recherche signaux faibles, si structure = DM_{Asie}, par exemple constituée de données textuelles issues d'un progiciel de gestion électronique de documents, connu en soi,
⇒ utiliser savoir faire 1 = [structuration par pays et créer DM_{Asie} (pays)]
⇒ utiliser savoir-faire 2 = détection de signaux d'alerte dans arbre primaire
⇒ si surface signal > seuil 1, créer O₃ tel que :
   → ID
   → Type (indice)
   → Créateur FOC (A_{Asie})
   → Forme (type = zone, créateur FOC, structure = DM_{Asie} (Japon), index = Société en crise au Japon, forme = branche concept, média = arbre concept)
   → Propriété (densité arbre concept)
⇒ demander établissement de contexte sur O₃ à LOC dans DM_{Asie}

### Règle de création de signaux faibles

Si but = recherche signaux faibles (plan 1), si retour de demande d'établissement de contexte sur O₃ = (δ¹O₃, O₃₀)
⇒ Réaliser l'inférence suivante : si O₃₀ lié à O₃^{δ1} avec type lien = contexte connexe de, si contexte (O₃^{δ1}) = société à actions en baisse, si type de forme (O₁^{δ1}) = zone, alors mettre à jour O₃ tel que δ²O₃^{δ1}
   → intérêt = 1
   → cat = 2 (un objet indice de catégorie 2 a son contexte à sa périphérie et l'information pertinente est dans le contexte plus que dans l'indice)
⇒ faire retour à A_{Asie} de (O₃^{δ1+δ2}, O₃₀) et mettre fin à plan 1

L'agent LOC agit selon les règles suivantes :
Si but = demander établissement de contexte sur O₃, si structure = DM_{Asie}
⇒ utiliser savoir-faire 1 = détection branche contexte par densité de surface faible
⇒ si densité branche > seuil 1, si densité branche connexe à O₃, alors crée O₃₀ (contexte) tel que :
   → Id
   → Type (objet reconnu)
   → Créateur LOC (A_{Asie})
   → Forme (type = tâche, créateur LOC, structure DM_{Asie}, index, forme = branche concept, média = arbre concept)
   → Utilisation = (société à actions en baisse)
   → Relié à (O₃ : créateur LOC, type = contexte connexe de)
⇒ metre à jour O₃ tel que δ¹O₃
   → Contexte = (société à actions en baisse)
   → Relié à (O₃ : créateur LOC, type = contexte connexe de)
⇒ faire retour à FOC de (O₃₀, δ¹O₃).

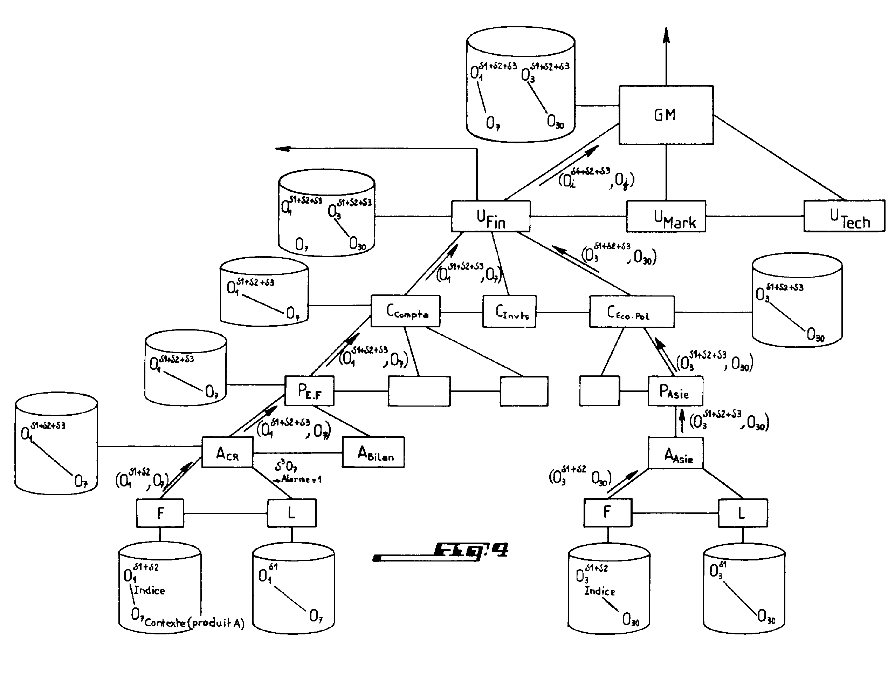

La règle de savoir-faire 1 de l'agent FOC dans le but de la recherche de signaux faibles consiste à accomplir une structuration par pays des données DM_{Asie}. Les données contenues dans ce paquet de données sont structurées de façon connue en soi sous forme d'un arbre de concept. La figure 3 montre une zone consacrée aux sociétés au Japon. Cette zone est formée par des points dont chacun représente une société de ce pays sans caractéristique particulière. Il faut donc regarder autour de cet objet ce qui peut être intéressant. Ceci définit les objets de catégorie 2. En application de la règle de savoir-faire 2, cette zone est détectée par l'agent, ce qui donne lieu à la création de l'objet de connaissance O₃ avec les champs indiqués ci-dessus.

Toujours en application de ces règles, l'agent FOC adresse une requête d'établissement de contexte de l'objet O₃ à l'agent LOC dans la structure de données DM_{Asie} Il est à noter que le terme dans le champ propriété "densité d'arbre concept" signifie qu'on observe une zone mal définie mais identifiée à une densité particulière de l'arbre.

En réponse à la requête, l'agent LOC s'adresse dans l'arbre de concept à la tâche de faible surface mais de haute densité représentée à la périphérie de la zone formant l'objet de connaissance O₃, et qui représente des sociétés à actions en baisse. Si cette zone présente une densité dépassant une valeur de seuil, l'agent crée l'objet de connaissance O₃₀ qui possède la structure indiquée plus haut, qui est du type objet reconnu et qui a inscrit dans son champ d'utilisation "société à actions en baisse". L'objet O₃₀ est relié à l'objet O₃.

Après la mise à jour de l'objet O₃ de façon qu'il se présente sous la forme O₃^{δ1+δ2}, cet objet et l'objet O₃₀ sont envoyés par l'agent FOC à l'agent analyseur A_{Asie}. Ce dernier ajoute à l'objet O₃^{δ1+δ2} l'élément δ³ indiquant que l'objet O₃ constitue une cause d'alarme.

Puis, les objets de connaissance O₃^{δ1+δ2+δ3} et O₃₀ sont transmis à l'agent GM au sommet de la pyramide selon les règles de transmission exposées plus haut lors de la remontée des objets O₁^{δ1+δ2+δ3} et O₇.

Avec le retour à l'agent GM des objets O₁^{δ1+δ2+δ3}, O₇, O₃^{δ1+δ2+δ3} et O₃₀ s'achève la mise en oeuvre de l'invariant 1 de la détection d'indices dans des conditions "rapidité et faible coût", dans le cadre du but global du suivi budgétaire.

La figure 3 illustre la création et le déplacement des objets de connaissances lors de la mise en oeuvre de l'invariant 1 et leur affichage aux interfaces Homme-Machine IHM des gestionnaires de connaissances collectives et individuelles CKM et IKM, ce dernier étant associé à l'agent UM_{fin}. La figure montre les objets de connaissances tels que stockés dans les dispositifs de stockage DST des différents agents, avec les liens entre les objets. Les flèches symbolisent les déplacements des objets de connaissance qui sont associés aux flèches.

Le système selon l'invention met alors en oeuvre l'invariant 2 résidant dans la validation des objets de connaissance qui ont été créés et construits au cours de l'accomplissement de l'invariant 1.

L'exemple illustre un fonctionnement en un mode où les invariants suivant l'invariant 1 seront réalisés dans le même IKM à savoir celui de l'utilisateur financier.

La mise en oeuvre de l'invariant 2 s'effectue selon des règles de but, de stratégie et de plan prédéterminés adaptables par l'utilisateur et définies en fonction de la manière selon laquelle l'invariant 1 a été mis en oeuvre et des objets de connaissance qui résultent de l'invariant 1. Les règles génériques de but, de stratégie et de structuration dans le cadre de l'invariant 2 des agents GM, UM, C et P sont données dans l'annexe II.

L'invariant 2 s'effectue de façon asynchrone vis-à-vis de l'invariant 1. Il peut être déclenché dès l'arrivée à l'agent GM d'un premier indice d'alarme et peut se dérouler en parallèle au déroulement de l'invariant 1.

Ainsi, comme on le constate dans l'annexe II, la règle de but de l'agent groupe maître GM dans le suivi budgétaire peut nécessiter lors de la mise en oeuvre de l'invariant 2 l'application conjointe de la stratégie 1.2 de la détection d'indices et de la stratégie 2 de la validation. La règle de stratégie 2 de la validation impose à l'agent GM :
Si strat = strat 2 (O₁, but global, condition 1, profil, état DH)
si service associé à agent = UM_{fin}, UMₘₐᵣₖ, Um_{tech} = service 1 de transmettre le message de stratégie = validation à l'agent UM_{fin} si les données structurées qui ont été associées aux services sus-mentionnés lors de la mise en oeuvre de l'invariant 1, à savoir les données DM_{fin}, DMₘₐᵣₖ et DM_{tech}.

L'agent UM_{fin}, selon sa règle de but et en application de sa règle de stratégie envoie un message de but 1 = strat 2.2 = validation par canal à l'agent Cᵢₙᵥ qui a été établi lors de la mise en oeuvre de l'invariant 1. Mais, puisque lors du déroulement de l'invariant 1, la boucle de l'agent canal Cᵢₙᵥ n'a pas été formée, cet agent doit l'établir maintenant.

En effet, selon sa règle de but "si but = but local 1 dans les conditions des objets de connaissance établis et de contrainte "rapidité, coût faible", l'agent Cᵢₙᵥ doit appliquer la règle de stratégie strat = strat 2. L'accomplissement de cette stratégie implique la structuration des services selon la stratégie 1.0 déjà décrite plus haut lors de la description de la mise en oeuvre de l'invariant 1. Cette stratégie 1.0 demande à l'agent Cᵢₙᵥ d'envoyer un message de requête de structuration de services à l'agent de structuration de service COTSₛ. L'agent de structuration en application de ses règles établit que, pour la mise en oeuvre du but global dans les conditions données, l'agent C_{Inv} peut disposer des services "cycle-investissement" et "fusion - acquisition". L'agent Cᵢₙᵥ crée alors les deux services P_{cycle inv} et P_{fus-acq}. L'agent de structuration des données COTS_{D} envoie également des données structurées appropriées, à savoir les paquets de données DM_{cycle inv} et DM_{fus-acq}. L'agent Cᵢₙᵥ est maintenant en mesure de mettre en oeuvre sa stratégie 2.2 de validation des objets de connaissance O₁^{δ1+δ2+δ3} et O₃^{δ1+δ2+δ3}.

Selon la règle de stratégie de validation de l'objet O₁ dans sa version complétée O₁^{δ1+δ2+δ3} dans les conditions définies par
si forme O₁ extraite des données structurées DM_{CR},
si propriété de O₁ = écart valeur numérique dans tableau de bord l'agent Cᵢₙᵥ envoie un message de but 1 = strat 2.2 = validation par piste sur l'objet O₁ à l'agent piste P_{cycle} ᵢₙᵥ.

En application de ses règles de stratégie de validation de l'objet O₃ dans sa version enrichie O₃^{δ1+δ2+δ3}, en mettant en oeuvre la stratégie 2.2 dans les conditions définies par
si forme de O₃ est extraite des données DM_{Asie},
si propriété de O₃ = densité branche concept, l'agent Cinq envoie le message de but = strat 2.2 = validation par piste sur l'objet O₃ à l'agent piste P_{fus-acq}.

On constate que du fait que l'objet O₁ a été extrait dans le domaine de la comptabilité et est une alarme sur des valeurs numériques de tableau de bord, en stratégie rapide, il est validé sur les cycles d'investissement. Par contre l'objet O₃ qui a été extrait dans le domaine de l'économie - politique et est une alarme sur une densité de points dans l'arbre de connaissance, en stratégie rapide est validé dans le domaine "fusion - acquisition".

Selon des règles de but et de stratégie, qui ont déjà été exposées lors de la description du déroulement de l'invariant 1, les agents piste doivent choisir le nombre des agents analyseurs.

En application de ces règles de but = but local = validation par piste sur l'objet O₁, demandant la mise en oeuvre de la stratégie 1 = recherche point d'appui, l'agent piste P_{cycle inv} crée un agent analyseur, à savoir l'agent A_{cycle inv} et envoie le message but = strat 1 = recherche point d'appui à cet agent.

L'agent piste P_{fus-acq} selon sa règle de but "si but = but local 1 = validation par piste sur O₃", en application de la stratégie strat = strat 1 qui en découle, crée un agent analyseur, à savoir l'agent A_{fus-acq} et envoie le message but 1 = strat 1 = recherche point d'appui sur O₃ à l'agent A_{fus-acq}.

Comme cela a été également expliqué plus haut, lors de la description du déroulement de l'invariant 1, les agents analyseurs, pour accomplir les opérations de validation mettent en oeuvre des règles de but et de plan d'action.

On expliquera ci-après plus en détail le travail des agents analyseurs en fonction de leur règle de but et de plan d'action.

L'agent analyseur A_{cycle inv} met en oeuvre les règles de but et de plan en fonction du fait que l'indice O₁ est de catégorie 1 et que l'alarme est déclenché sur une propriété d'écart de valeur numérique dans le tableau de bord. Pour la mise en oeuvre du plan l'agent A_{cycle inv} crée 3 agents cognitifs à savoir LOC = détecteur de branche de concept ; FOC = détecteur de signaux TB ; VAL = détecteur de corrélation.

L'agent analyseur A_{cycle inv} envoie tout d'abord une requête à l'agent LOC de précision de contexte. L'agent LOC met en oeuvre la règle de but suivante :
Si but = préciser contexte de O₁^{δ1+δ2+δ3} (plan 1, but global, DM_{cycle-inv}, DM_{CR}) , si forme O₁ extraite de DM_{CR} si type forme = squelette, si contexte O₁ = produit A, si O₁ lié à O₇ de type = contexte de
⇒ utiliser savoir-faire 1 = détecter contour de branche de concept sur critère décrivant le contexte de l'objet O₁ dans DM_{cycle inv}
⇒ créer O₂₀ (branche de concept)
   → ID
   → Type (point repère)
   → Créateur LOC (A_{cycle inv})
   → Forme (type = zone, créateur LOC, structure DM_{cycle inv}, index, forme = branche concept, média = arbre concept)
   → Relier à (O₁ : créateur LOC, type = lié par le contexte (O₁), O₇ : créateur LOC, type = décrivant contexte)
⇒ mise à jour de O₁^{δ1+δ2+δ3} δ⁴O₁
   → Relié à (O₂₀ : créateur LOC, type-relié par le contexte (O₁))
⇒ faire requête d'établissement de signaux faibles sur O₂₀ dans DM_{cycle-inv} à FOC
⇒ si retour de FOC = (δ¹O₂₀, O₂), faire mise à jour de O₂₀ dans LOC : δ¹O₂₀
   → Relié à (O₂ : créateur FOC, type = contient)
⇒ faire retour à agent père (δ⁴O₁^{δ1+δ2+δ3}, O₂₀^{δ1}, O₂)

Il ressort des règles de plan, que l'agent A_{cycle inv} a créé trois agents cognitifs, à savoir un agent de localisation LOC formé par un détecteur de contour de branches de concept sur critère, un agent de focalisation FOC formé par un détecteur de signaux de tableau de bord (TB) et un agent de validation VAL formé par un détecteur de corrélation. L'agent analyseur A_{cycle inv} adresse une requête de précision de contexte sur l'objet O₁^{δ1+δ2+δ3} à l'agent LOC dans un champ de connaissances de cycle d'investissement DM_{cycle inv}, alors que l'indice a été créé dans un champ de connaissances de comptabilité DM_{com}. Ceci met en oeuvre l'analyse multi-point de vue à l'intérieur d'une machine IKM. L'agent LOC est chargé de détecter dans l'arbre de concept de connaissances structurées DM_{cycle-inv} un contour, sur critère lié au contexte de l'indice. Ce critère concerne le produit PA. L'agent cognitif doit allumer dans l'arbre de concept représenté schématiquement sur la figure 2 les points qui concernent le produit PA. L'arbre de concept correspondant à l'arbre de connaissance structuré DM_{CR} selon la figure 2 a pour branches le chiffre d'affaire ca, les charges ch, les résultats res. Mais, dans l'arbre DM_{cycle-inv} les branches constituent les postes Recherche - Développement R & D, Commercial COC et Fabrication FA. Sur la figure 2 l'agent LOC allumera les points sur les sous-branches de produits P les points qui représentent le produit PA. Le contour englobant le produit PA dans l'arbre de concept DM_{cycle-inv} constitue l'objet de connaissance que créé l'agent LOC. Cet objet est du type point de repère, présente la forme type = zone, forme = branche concept, média = arbre concept et est relié à O₁ par le contexte O₇. Ceci créé un nouvel élément de connaissance δ⁴0₁ et l'agent LOC met à jour l'objet O₁^{δ1+δ2+δ3} qui devient alors O₁^{δ1+δ2+δ3+δ4}.

Puis l'agent LOC adresse une requête à l'agent FOC pour que celui-ci établisse des signaux faibles concernant l'objet O₂₀ dans la structure DM_{cycle inv}. L'agent FOC met en oeuvre les règles de savoir faire telles que définies ci-après :
Si but = établir signaux faibles sur O₂₀, si structure = DM_{cycle inv}, si type forme (O₂₀)= branche concept
⇒ utiliser savoir-faire 1 = calcul de signaux de tableau de bord (TB) dans structure DM_{cycle-inv}
⇒ si amplitude signaux > seuil 1, si surface signaux valeurs sources > seuil 2, créer O₂ tel que
   → ID
   → Type (indice)
   → Créateur FOC (A_{cycle inv})
   → Forme (type = squelette, créateur FOC, structure DM_{cycle-inv}, index, forme = valeur numérique, média = valeur numérique dans DM_{cycle-inv})
   → Propriété (Ecart TB)
   → Relié à (O₂₀ : créateur FOC, type = contenu dans)
⇒ faire mise à jour de O₂₀ : δ¹O₂₀
   → Relié à (O₂ : créateur FOC, type contient)
⇒ faire retour à LOC (δ¹O₂₀, O₂)

En application de ces règles, l'agent FOC établit des signaux faibles de tableau de bord dans la structure DM_{cycle-inv}. Si l'agent FOC détecte des signaux d'une amplitude supérieure au seuil 1, il créé l'objet O₂ indiqué plus haut qui est du type indice, de forme du type squelette et représente une valeur numérique en étant relié à l'objet O₂₀ par une liaison du type "contenu dans". En se reportant à la figure 2, on constate en effet que l'objet O₂ se trouve à l'intérieur du contour O₂₀ sur la sous-branche de produits P de la branche R & D. Ce fait apporte un élément de connaissance δ¹O₂₀ à l'objet O₂₀ et permet à l'agent FOC de mettre à jour l'objet O₂₀ pour que celui-ci devienne O₂₀^{δ1}. Puis l'agent FOC renvoie à l'agent LOC les objets δ¹O₂₀ et O₂. Après le retour de δ¹O₂₀ et O₂ à l'agent LOC, ce dernier met à jour l'objet O₁ selon δ⁴O₁ qui devient alors O₁^{δ1+δ2+δ3+δ4}. Puis les règles de l'agent LOC amènent celui-ci à envoyer les éléments δ⁴O₁^{δ1+δ2+δ3} , δ¹O₂₀ et O₂ à l'agent A_{cycle inv}. Cet agent demande ensuite à l'agent cognitif de validation VAL de préciser les objets O₁^{δ1+δ2+δ3+δ4}, O₂₀^{δ1},O₂ selon les règles de savoir-faire de validation suivantes :
Si but = préciser (O₁^{δ1+δ2+δ3+δ4} , O₂₀^{δ1}, O₂) (plan 1, dans DM_{cycle inv}, DM_{CR})
si type O₂ = indice, si propriété O₂ = écart TB, si O₂ lié à O₂₀ et du type = contenu dans, si O₁ et O₂₀ lié par le contexte
⇒ utiliser savoir-faire 1 = recherche corrélation entre O₁, O₂, O₂₀ par caractéristique commune
⇒ si résultat de savoir-faire 1 = δ⁵O₁, faire mises à jour δ⁵O₁
   → Relié à O₂ ( créateur VAL, type = corrélation par le contexte de O₁) δ¹O₂
   → Type = (indice/point d'appui)
   → Relié à O₁(créateur VAL, type corrélation par le contexte de O₁)
⇒ faire retour au père (δ⁵O₁, δ¹O₂, O₂₀^{δ1}).

Selon sa règle de précision d'indice de la catégorie 1 l'agent VAL en utilisant son savoir faire de recherche de corrélation établiera que les objets O₁ et O₂ sont liés du fait qu'ils concernent tous les deux le produit PA. Les deux objets sont donc corrélés par le contexte PA, ce qui constitue le nouvel élément de connaissance δ⁵O₁ relié à O₂ et du type corrélation indiqué plus haut, ainsi que le nouvel élément δ¹O₂ du type indice qui devient point d'appui relié à O₁. Après leur mise à jour les objets de connaissance O₁^{δ1 à δ5} , O₂^{δ1} et O₂₀^{δ1} sont renvoyés à l'agent analyseur A_{cycle-inv}, ce qui met fin à la validation de l'objet de connaissance O₁. La validation a permis d'établir l'objet O₂ constituant un écart dans le domaine R & D des DM_{cycle-inv} comme point d'appui de l'objet d'indice d'alerte O₁.

Pendant la validation avec recherche d'appui effectuée sur l'objet O₁, l'agent analyseur A_{fus-acq} procède à la validation de l'objet O₃.

Pour accomplir cette fonction, l'agent A_{fus-acq} agit selon les règles de but et de plan suivantes :

### Règle de but

Si but = but local 1 = Recherche point d'appui (O₃, but global, Cat2), dans
DM_{fus-acq}, DM_{Asie}
⇒ Plan = plan 1 (O₃, but global, cat 2, DM_{fus-acq}, DM_{Asie}

### Règle de plan

Si plan = plan 1 (O₃, but global, cat 2, DM_{fus-acq}, DM_{Asie})
⇒ créer deux agents cognitifs : LOC = détecteur branche concept et VAL = détecteur de corrélation
⇒ faire requête 1 à LOC = préciser contexte de O₃ (plan 1, DM_{fus-acq}, DM_{Asie})
⇒ si retour de requête (δ⁴O₃, O₃₁), faire requête 2 à VAL (O₃,O₃₁)
⇒ si fin requête 2 = (δ⁵O₃, O^{δ1}₃₃, δ¹O₃₁), faire retour à A_{Asie} (δ⁵O₃, δ¹O₃₁, O^{δ1}₃₃)

Plus précisément, l'agent A_{fus-acq} crée deux agents cognitifs, à savoir un agent de localisation LOC formé par un détecteur de contour de branches de concept sur critère et un agent de validation VAL qui est un détecteur de corrélation. En mettant en oeuvre sa règle de plan, l'agent A_{Asie} adresse une requête à l'agent LOC lui demandant de préciser le contexte de l'objet O₃ dans le domaine des connaissances structurées DM_{fus-acq}.

L'agent LOC, en réponse à cette requête met en oeuvre sa règle de précision de context suivante
Si but = préciser contexte de O₃^{δ1+δ2+δ3} (plan 1, but global, DM_{fus-acq}, DM_{Asie}), si contexte O₃ = société à actions en baisse, si forme O₃ extraite de DM_{Asie}, si O₃ lié à O₃₀ de type = contexte de)
⇒ utiliser savoir-faire 1 = détecter contour de branche concept sur critère décrivant le contexte de l'objet O₃ dans DM_{fus-acq}
⇒ créer O₃₁ (branche concept)
   → ID
   → Type (point de repère)
   → Créateur LOC (A_{fus-acq}) structure DM_{fus-acq}, forme = branche concept, média = arbre concept)
   → Relié à O₃ (créateur LOC, type lié par le contexte de O₃, O₃₀ : créateur LOC, type = décrivant contexte)
⇒ mise à jour de O₃^{δ1+δ2+δ3} δ⁴O₃
   → Relié à O₃₁ (créateur LOC, type = lié par le contexte de O₃)
⇒ faire retour à agent père (δ⁴O₃^{δ+δ2+δ3}, O₃₁)

Concrétement, pour mettre en oeuvre cette règle de précision de contexte, l'agent LOC utilise le savoir-faire 1 de détection de contour de branche de concept sur critère décrivant le contexte de l'objet O₃ dans le domaine DM_{fus-acq} et organisé de façon connu en soi sous forme de branche de concept du domaine DM_{fus-acq}. L'objet à considérer est une zone "acquisition des sociétés à actions en baisse". Cette zone donne lieu à la création de l'objet O₃₁ qui est du type point de repère et de forme du type zone dans l'arbre de concept. L'objet O₃₁ est d'autre part relié à O₃ par le contexte de O₃ et à O₃₀ qui décrit le contexte de O₃ dans le domaine DM_{Asie}. Le lien entre O₃₁ et O₃₀ est virtuel dans l'agent LOC. Puis ce dernier effectue une mise à jour de O₃^{δ1+δ2+δ3} ce qui permet d'obtenir δ⁴O₃ qui est relié à O₃₁ par une liaison du type lié par contexte de O₃. Ensuite l'agent LOC renvoie δ⁴O₃^{δ1+δ2+δ3} et O₃₁ à l'agent père, à savoir l'agent A_{fus-acq}.

La règle de plan de l'agent A_{fus-acq} amène celui-ci après le retour de la requête adressée à l'agent LOC, à adresser une requête 2 à l'agent VAL pour que celui-ci recherche une corrélation entre les objets O₃₁ et O₃ sous la condition qu'il doit s'agir de sociétés concurrentes sur le même type de produit. Il s'agit donc d'une sélection d'un contour sous critère. La contrainte de sociétés concurrentes imposée par VAL vient du fait que l'indice O₃ a été détecté par des agents de veille d'économie politique. Il convient donc d'étudier les éléments de cet indice qui sont liés à la concurrence. Le contour ainsi obtenu amène l'agent VAL de créer l'objet O₃₃ du type point d'appui. O₃₃ est contenu dans O₃ et dans O₃₁. L'agent VAL créé donc les mises à jour suivantes :
δ⁵O₃
→ Relié à O₃₃ (créateur VAL, type = contient)
δ¹O₃₁
→ Relié à O₃₃ (créateur VAL, type = contient)

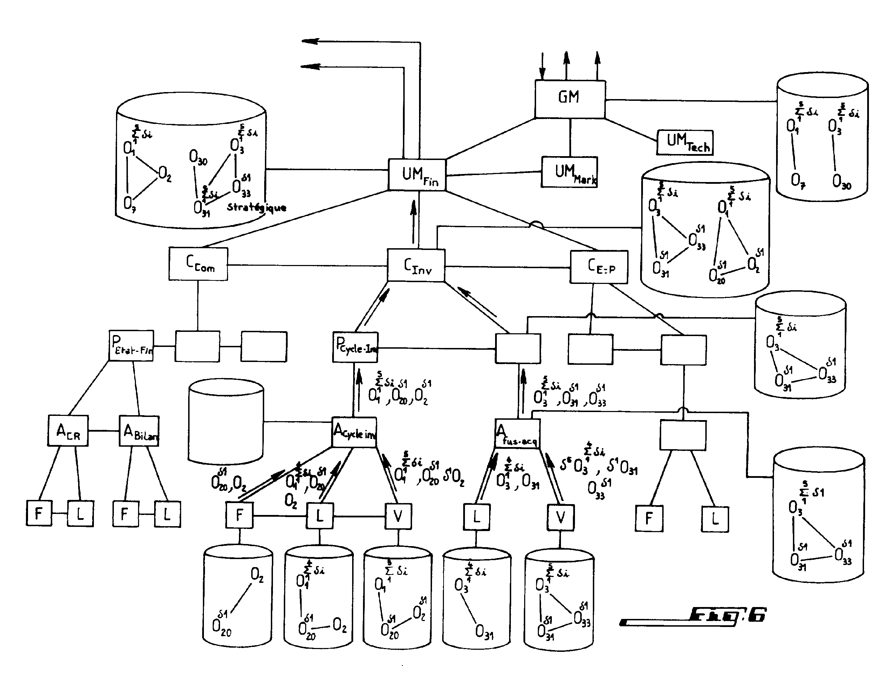

L'agent recherche encore s'il existe entre les sociétés de la zone O₃₃ une caractéristique commune. Dans le présent exemple il s'avère que ces sociétés ont en commun leur mode d'acquisition qui est du type OPA, à savoir "offre public d'achat". Ceci apporte comme élément supplémentaire δ¹O₃₃ qui devient du type objet reconnu, d'utilisation OPA concurrente et a la propriété d'être stratégique. L'agent VAL envoie ensuite à l'agent analyseur A_{fus-acq} les objets δ⁵O₃^{δ1+δ2+δ3+δ4}, δ¹O₃₁ et O₃₃^{δ1}. L'agent A_{fus-acq} met à jour les éléments et renvoie à l'agent piste P_{fus-acq} les objets O₃^{δ1 à δ5}, O₃₁^{δ1} et O₃₃^{δ1}. Ces objets sont alors envoyés à l'agent canal Cᵢₙᵥ qui les transmet ensemble avec des objets O₁^{δ1 à δ5}, O₂₀^{δ1} et O₂^{δ1} en provenance de l'agent piste P_{cycleinv} à l'agent UM_{fin} qui à son tour les transmet à l'agent maître GM. La figure 4 illustre pour l'invariant 2, la création, la construction et le déplacement des objets de connaissance et les objets tels qu'ils sont stockés dans les différents dispositifs de stockage DST des différents agents constituant le réseau selon l'invention.

L'agent GM dispose ainsi des résultats des deux procédures d'invariant 1 et 2 qui ont été établies automatiquement par un réseau d'agents fonctionnant chacune selon des règles de but, de stratégie et de plan d'action, spécifiques en fonction d'un but global à d'action, spécifiques en fonction d'un but global à atteindre et modifiables par l'homme. Dans le cas présent, l'objet O₂ est corrélé à l'indice O₁. Ce sont deux objets qui ont la propriété d'avoir des écarts dans les tableaux de bord de comptabilité et d'investissement, et ceci en relation avec le produit PA. Ces deux observations fournissent donc une visibilité à l'utilisateur financier sur le type de difficultés financières que génère systématiquement le produit PA. D'autre part, l'objet de connaissance O₃₃ s'avère être un élément stratégique qui permet à l'agent GM d'apprécier l'incident formé par l'objet O₃ qui a déclenché le processus de validation qui vient d'être décrit. Cette caractéristique stratégique pourra être réutilisée ultérieurement par le système ou par l'utilisateur. En fonction de cette appréciation, le gestionnaire de connaissance collectif CKM peut prendre des décisions appropriées, en particulier celles d'utiliser ses agents Marketing et Technique pour approfondir davantage l'analyse de la problématique concernant O₁ et O₃, aussi selon des règles de but, de stratégie et de plan. Il est à noter que le système de l'invention assure un contrôle qui peut être permanent et se déclencher dès l'apparition d'un faible indice, en mettant en corrélation plusieurs points de vue différents, ou plusieurs compétences.

Il est à noter que la machine présente tout au cours du processus les résultats obtenus sous forme d'objets de connaissances construites. Etant donné qu'elle est en mesure de lire la structure de ces objets de connaissance et donc connaître leur signification par l'intermédaire de règles d'interprétation qu'elle possède, elle peut donner à l'homme des propositions d'intervention et de décision lui permettant, le cas échéant, d'intervenir sur la suite du processus décisionnel et agir en conséquence.

L'invention vient d'être décrite par l'intermédiaire d'un exemple pratique qui implique deux points de vue obtenus dans des domaines de connaissances différents. Bien entendu, d'autres buts globaux pourraient impliquer la prise d'un plus grand nombre de points de vue ou domaines de compétence différents et, bien entendu l'autostructuration d'un autre réseau d'agents fonctionnant selon d'autres règles de but et de stratégie et de plan d'action avec création de boucles de service assorties de domaine de connaissance structurée appropriée, fournie par les agents de structuration de service et de données.

Il ressort de la description de l'invention qui précède que la structure du réseau se compose d'agents munis de règles et organisés en boucles de façon fractale. Les objets de connaissances se déplacent dans le réseau, sous l'impulsions des règles des agents. Ce sont des connaissances mobiles, se déplaçant "horizontalement" et "verticalement", c'est-à-dire respectivement entre les fils d'une même boucle et les fils et leur maître.

Il ressort de la description qui précède qu'un IKM est un réseau d'agents aux services d'un utilisateur humain, et qu'un CKM est un réseau d'IKMs au service d'une collectivité d'utilisateurs, et que les IKMs sont reliés par exemple via un réseau Intranet ou Internet. Les objets mobiles se déplacent donc dans le réseau Internet ou Intranet.

Tout GM peut interagir avec un autre GM représenté sur la figure 1 en GM' constituant ainsi un réseau de CKMs via des réseaux Intranet ou Internet. Le réseau des CKMs sera au service d'une organisation de groupes multiples.

On rappelera que le processus décisionnel est décomposé en étapes décisionnelles, dites "invariants cognitifs", qui vont agir chacune et en parallèle sur les objets de connaissances créés et que les agents cognitifs créateurs dépendent de l'invariant cognitif et les agents constructeurs du but global.

La décomposition en stratégies et en buts individuels se propageant dans le réseau va se répéter pour chacune des étapes décisionnelles à chaque fois selon des stratégies spécifiques à l'étape décisionnelle.

On rappelera encore que toutes les règles, les buts et les stratégies sont modifiables par l'homme afin de rendre flexibles les processus décisionnels et adaptables aux utilisateurs.

Le réseau d'agents en forme de pyramide se décompose également selon des lignes de partage verticales qui séparent les agents UM entre eux. Sous chaque UM est un réseau d'agents qui seront les services disponibles à la fonction de chaque agent UM, c'est-à-dire au niveau de chaque utilisateur. Ceci est un réseau individuel appelé IKM mettant en oeuvre l'interaction des différents services de UM, c'est-à-dire différents points de vue par une même compétence fonctionnelle correspondant à celle de l'utilisateur. La boucle dont l'agent GM est le maître, met en interaction les agents UM, et constituera un réseau de réseaux d'agents via Internet créant ainsi une intelligence collective. Ce réseau de réseaux est une machine collective dite CKM. Il est au service d'une collectivité d'utilisateurs mettant en interaction plusieurs compétences fonctionnelles.

Le système peut fonctionner selon deux modes ; le mode IKM et CKM. Tout système IKM est potentiellement intégrable à un CKM. Pour cela, il a toujours un agent GM qui est le père de l'agent UM. C'est l'agent maître qui permet l'intégration de l'IKM à un CKM.

Enfin, il est encore à souligner que dans l'agent de structuration de service, on a prévu pour chaque but global que le système doit être en mesure de traiter les services dont chaque agent maître doit disposer pour accomplir sa fonction, avec les règles de but et stratégie assorties. En fonction de la disponibilité des services, l'agent est en mesure de proposer plusieurs possibilités.

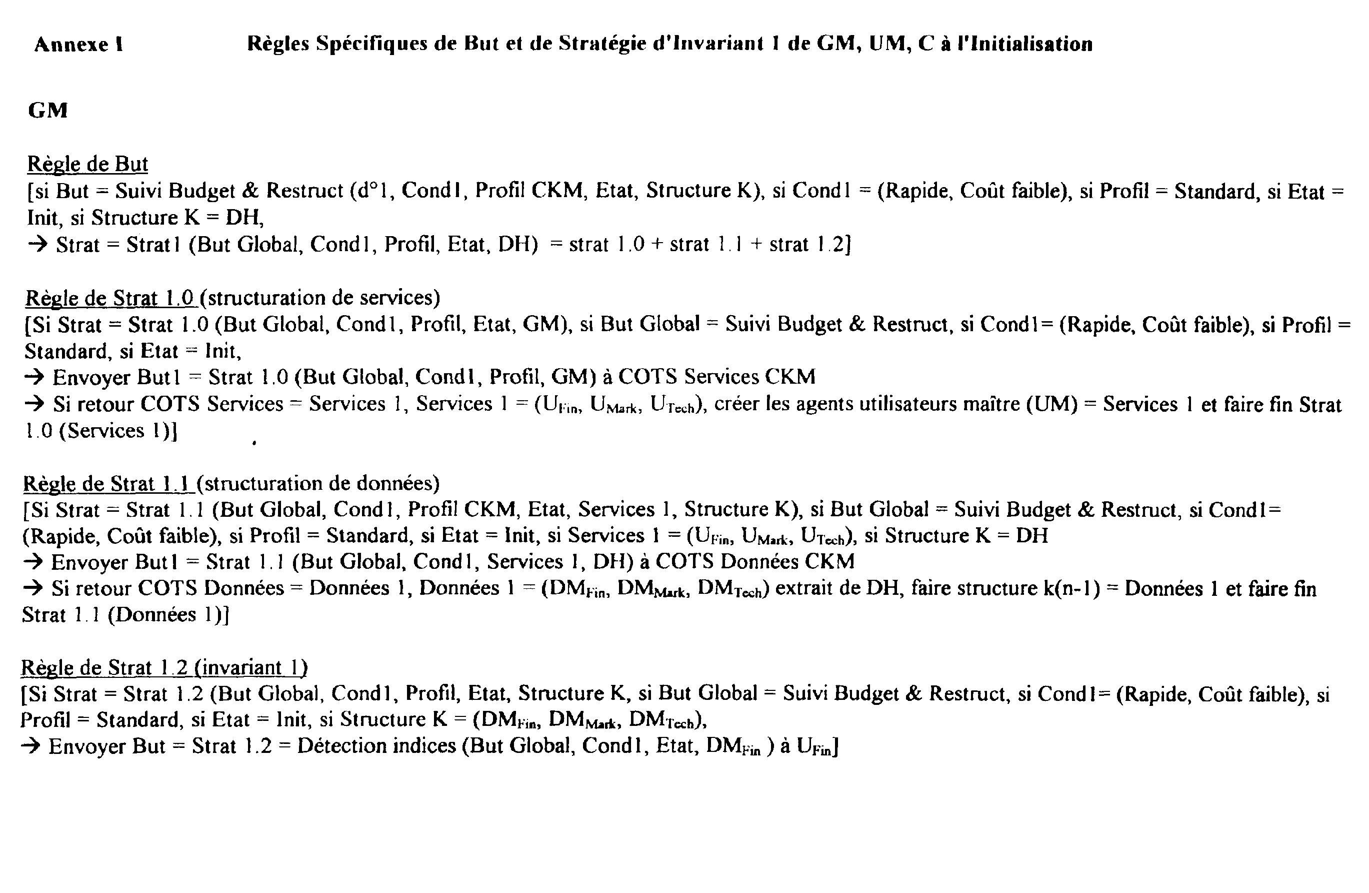

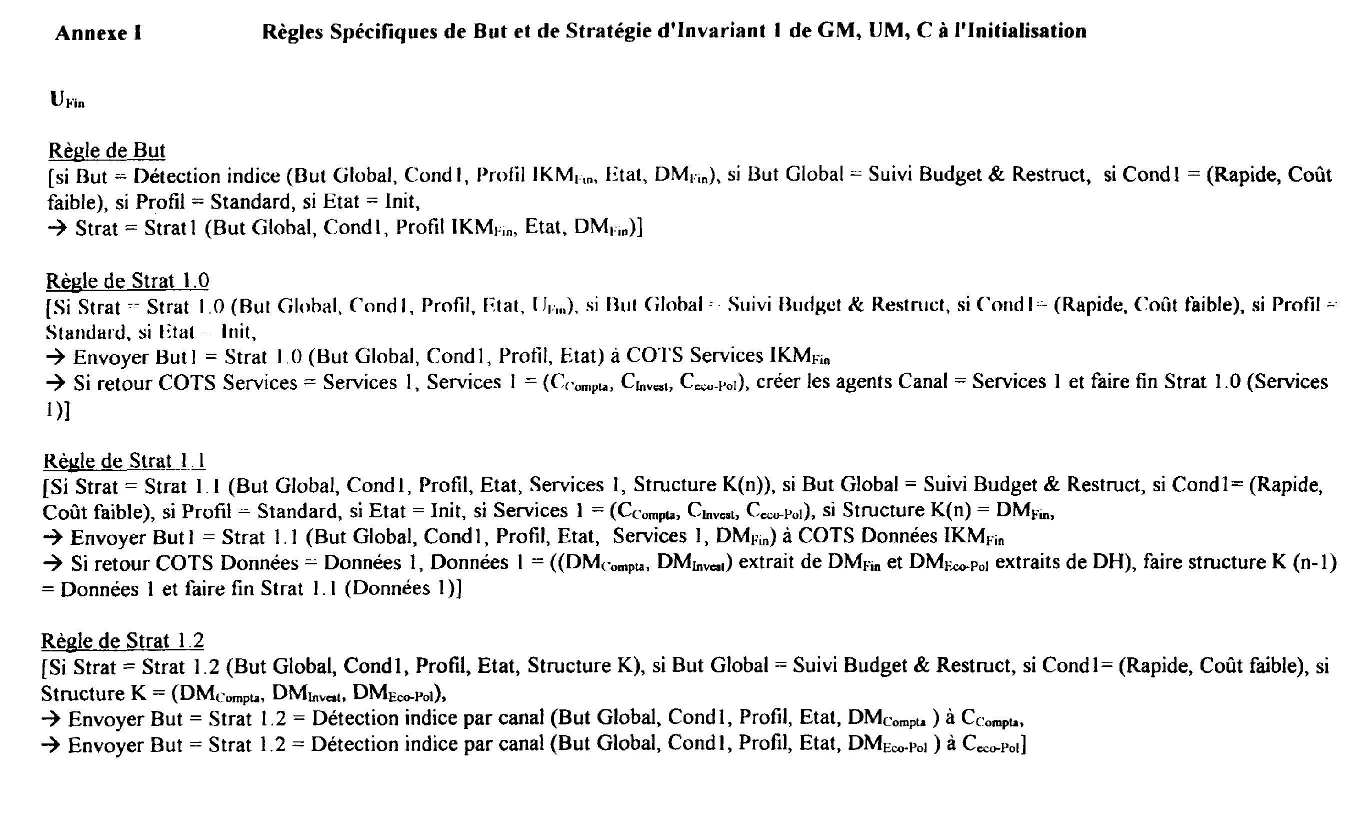

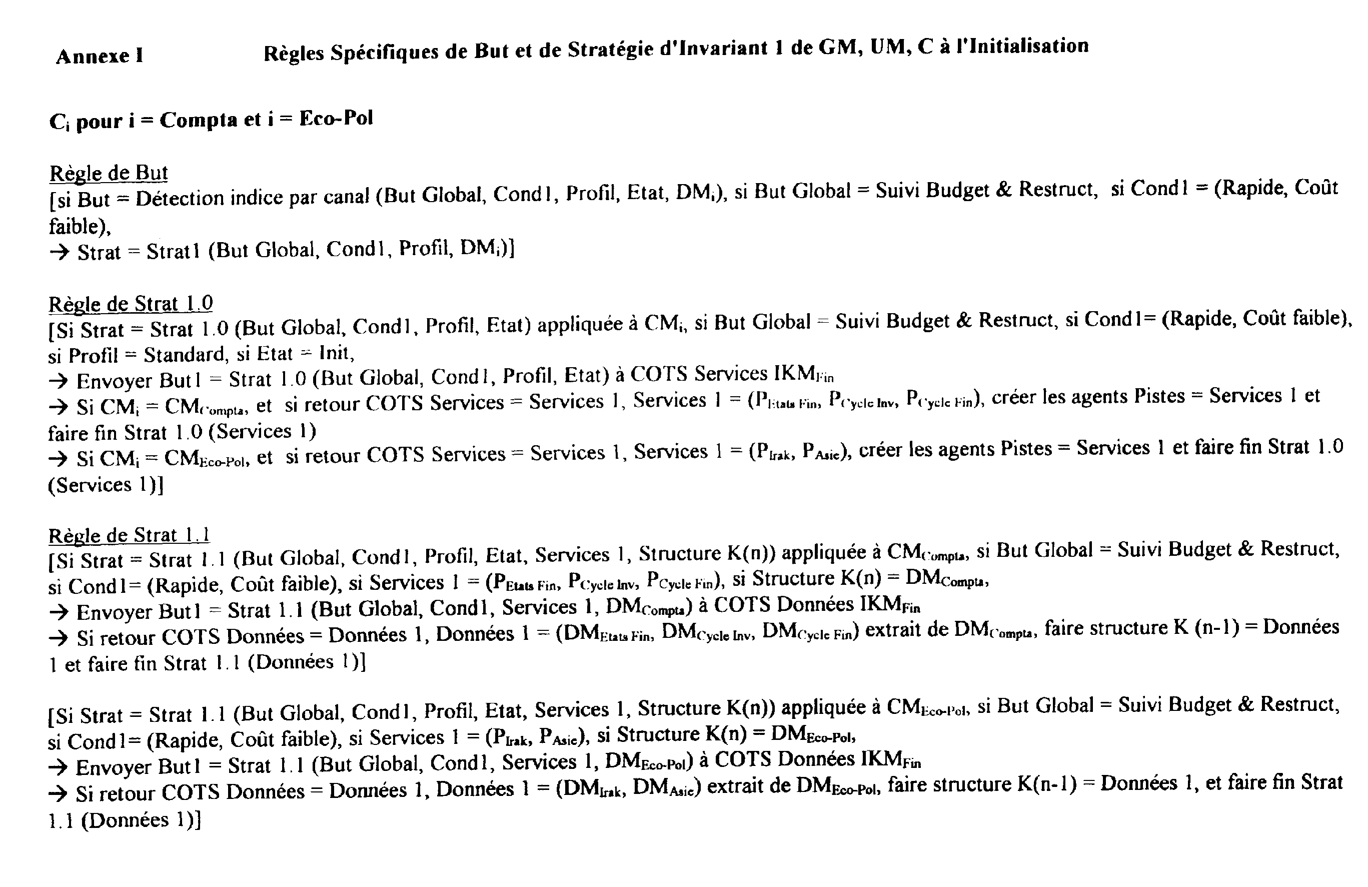

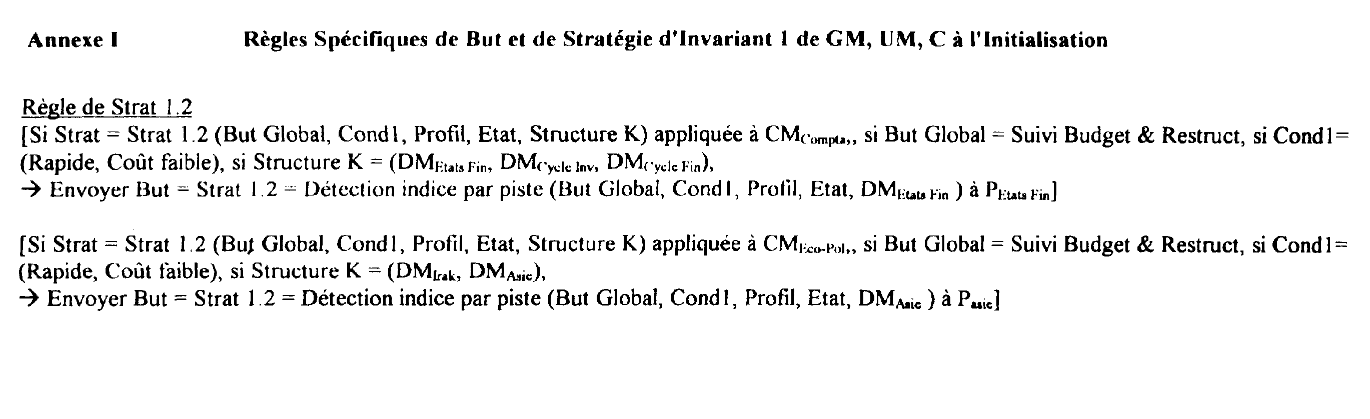

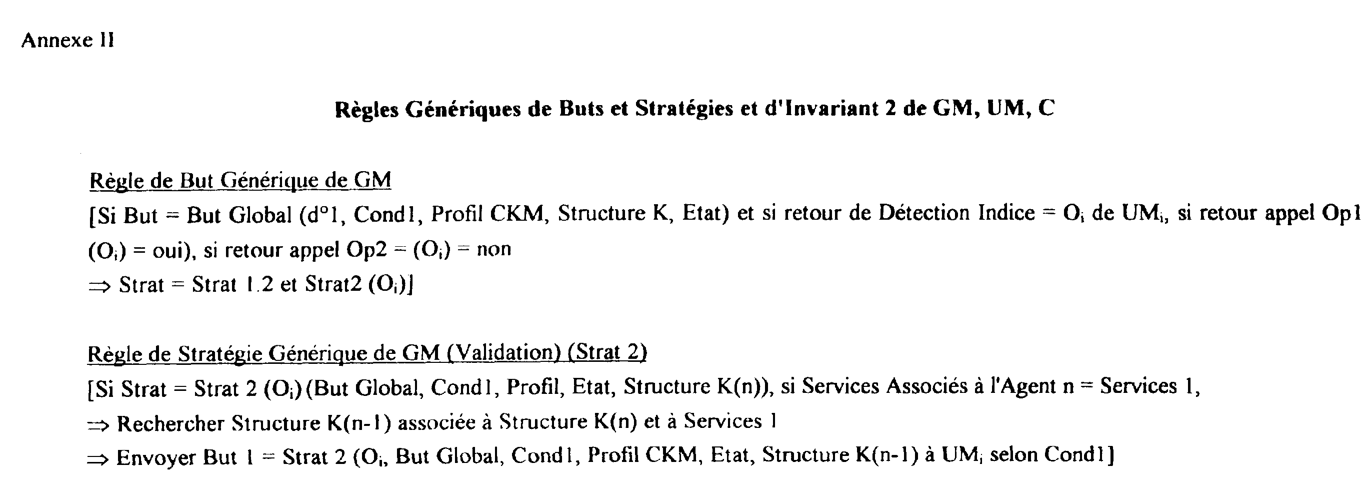

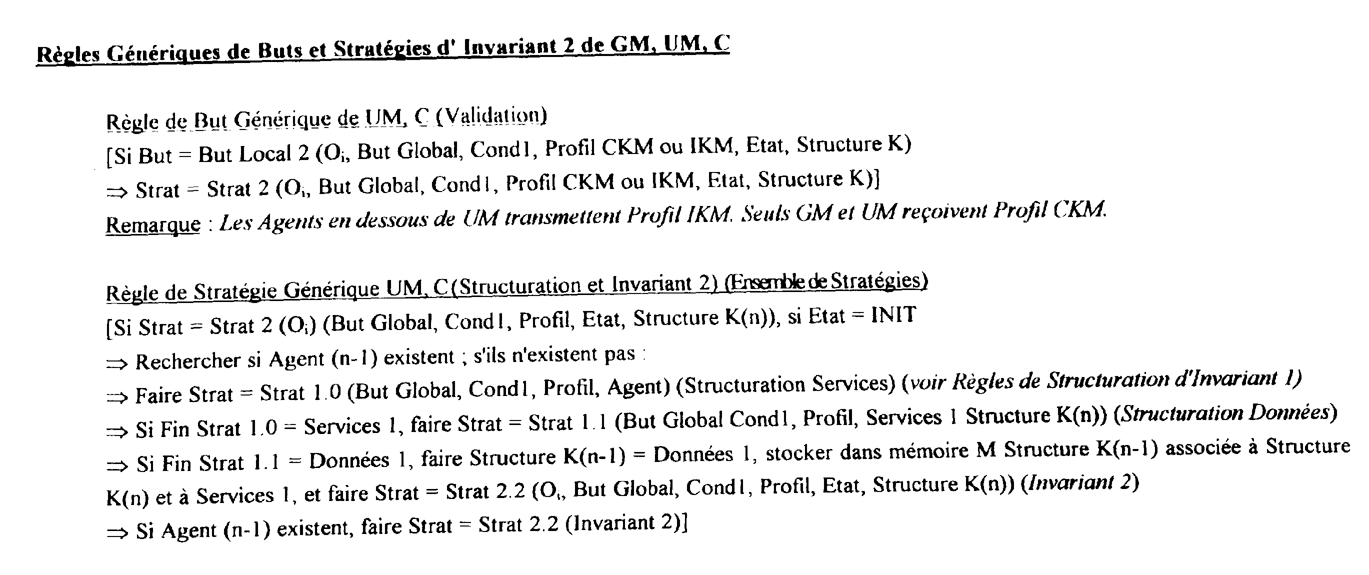

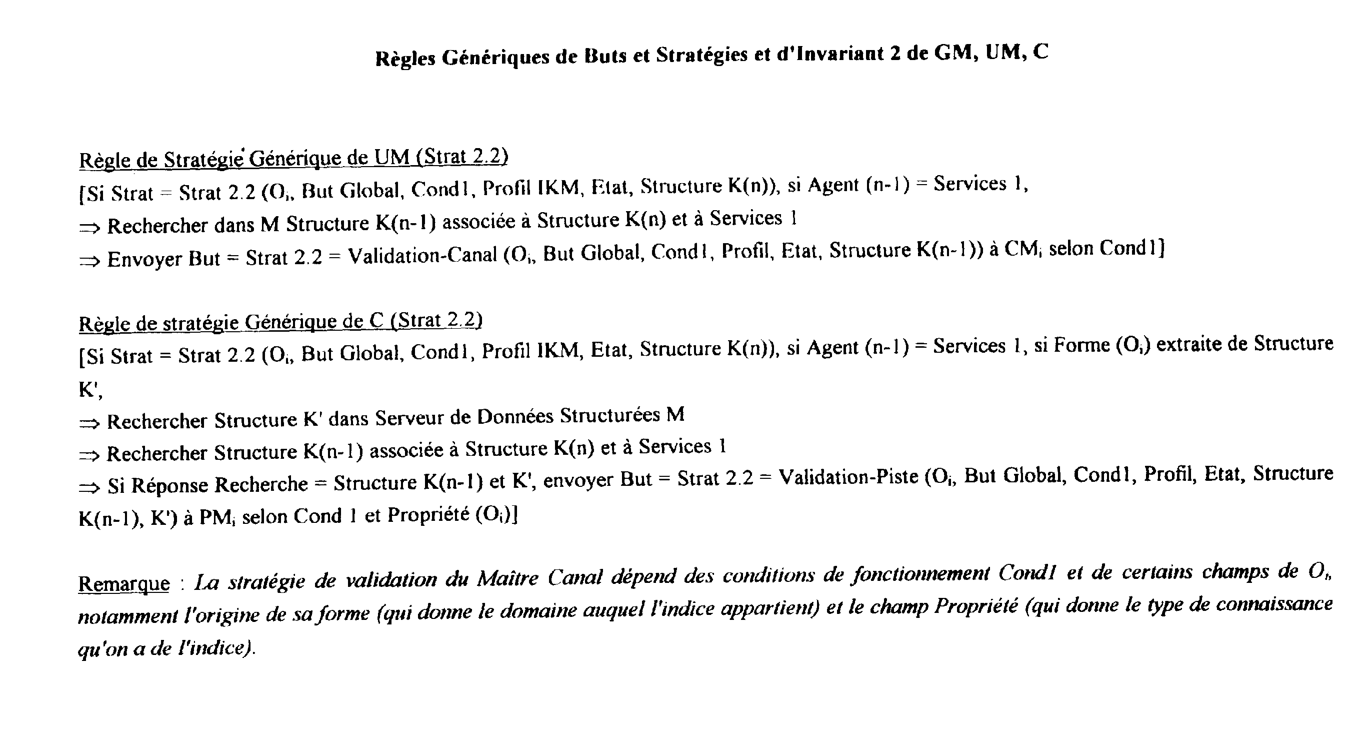

## Revendications

1. Procédé de pilotage d'un processus décisionnel lors de la poursuite d'un but global dans un domaine d'application déterminé, tel qu'économique, technique, organisationnel ou analogue, caractérisé en ce qu'il est automatisé par la mise en relation selon des règles et des stratégies prédéterminées en fonction du but global d'au moins un objet de connaissances reflétant un point de vue du domaine d'application et comportant une information interprétée comme un indice d'alarme pour déclencher le processus décisionnel, avec d'autres objets de connaissances reflétant d'autres points de vue ou d'autres compétences fonctionnelles du même domaine d'application ou d'autres domaines.

2. Procédé selon la revendication 1, caractérisé en ce que l'on crée un réseau d'agents de traitement d'informations, comportant des agents créateurs d'objets de connaissance et des agents constructeur d'objets de connaissance par ajout aux objets de connaissance créés d'éléments de connaissance supplémentaires, obtenus par une mise en relation avec d'autres objets de connaissance.

3. Procédé selon la revendication 2, caractérisé en ce que le réseau d'agents manipule les objets de connaissances qui deviennent des connaissances mobiles se déplaçant dans le réseau.

4. Procédé selon la revendication 2 ou 3, caractérisé en ce que l'on crée le réseau sous forme d'une structure hiérarchisée en fonction du but global précité, chaque agent comportant des règles de but, de stratégie et, le cas échant, de plan d'action.

5. Procédé selon la revendication 4, caractérisé en ce que les agents sont organisés en boucles , chacune comportant un agent maître et au moins un agent fils, un agent fils pouvant être un agent maître d'une boucle d'un niveau inférieur du réseau, les boucles terminales du réseau étant formée par des boucles d'analyse d'objets de connaissance comportant un agent maître analyseur et des agents créateur d'objets de connaissance, les objets de connaissance se construisant lors de leur déplacement dans la structure du réseau vers le sommet du réseau.

6. Procédé selon la revendication 5, caractérisé en ce que l'on déplace les objets de connaissances mobiles dans la structure à l'intérieur des boucles ou entre elles.

7. Procédé selon la revendication 6, caractérisé en ce que la structure du réseau est obtenue par une décomposition successive du processus de décision à partir du but global en stratégies et buts individuels, la stratégie d'un niveau n d'agent devenant le but des agents du niveau inférieur n-1.

8. Procédé selon la revendication 6 ou 7, caractérisé en ce que le processus décisionnel est décomposé en étapes décisionnelles, appelées invariants cognitifs, qui se propagent sous forme de buts et de stratégies de niveau en niveau dans la structure.

9. Procédé selon la revendication 7 ou 8, caractérisé en ce que le réseau est construit selon une configuration fractale.

10. Procédé selon l'une des revendications précédentes, caractérisé en ce que, pour une application donnée comportant un but global, on détermine la structure des boucles d'agents en se référant à un agent de structuration des services de la boucle et un agent de structuration des connaissances pour chaque service crée.

11. Procédé selon l'une des revendications 1 à 10, caractérisé en ce que l'on associe à un agent analyseur un agent cognitif pour la création d'objets de connaissance représentatifs d'un indice d'alarme et un agent cognitif pour l'établissement d'un objet de connaissance du contexte dans lequel se situe l'objet de connaissance d'indice d'alarme.

12. Procédé selon la revendication 11, caractérisé en ce que le contexte établi constitue un autre objet de connaissance et on met à jour l'objet de connaissance d'indice d'alarme par sa liaison par le contexte à l'objet de connaissance de contexte.

13. Procédé selon l'une des revendications 11 ou 12, caractérisé en ce que l'agent cognitif de création d'objets de connaissance d'indice d'alarme est un détecteur de concept de valeurs numériques.

14. Procédé selon l'une des revendications 11 ou 12, caractérisé en ce que l'agent cognitif de création d'objets de connaissance d'indice d'alarme est un détecteur de zones dans une structure de connaissance en forme d'un arbre de concept.

15. Procédé selon la revendication 14, caractérisé en ce que l'agent cognitif est un détecteur de caractéristiques communes entre l'objet de connaissance d'indice d'alarme et l'objet de connaissance de contexte.

16. Procédé selon l'une des revendications 2 à 13, caractérisé en ce que les agents cognitifs de création d'objets d'indice d'alarme et du contexte dans lequel se situe les objets d'indice d'alarme sont utilisés pour la mise en oeuvre d'un premier invariant de création d'objets de connaissance d'indice d'alarme, tel qu'un processus de détection d'indices.

17. Procédé selon la revendication 16, caractérisé en ce que l'on met en oeuvre au moins un second invariant de validation des objets de connaissance créés au cours du premier invariant, dans un domaine de connaissance structuré différent du domaine du premier invariant.

18. Procédé selon la revendication 17, caractérisé en ce que l'on associe pour la mise en oeuvre du second invariant à un agent analyseur un agent cognitif créateur détecteur du contexte dans le domaine de connaissances différent précité, des objets de connaissance du premier invariant, fait créer par cet agent des objets de connaissance de contexte, associe à l'agent analyseur, le cas échéant, un agent créateur de détection de signaux faibles concernant les objets de connaissance de contexte et un agent cognitif de validation par détection de corrélation constituant des points d'appui des objets de connaissance d'indice d'alarme crée lors du premier invariant.

19. Procédé selon l'une des revendications 1 à 18, caractérisé en ce que l'on prévoit la possibilité d'un dialogue Homme-Machine pour que l'homme puisse modifier les règles de la machine en fonction de sa propre compétence.

20. Procédé selon la revendication 19, caractérisé en ce que la machine présente à l'homme tout au long du processus décisionnel les résultats obtenus et, le cas échéant, lui propose des stratégies de décision et d'intervention.

21. Système pour la mise en oeuvre du procédé selon l'une des revendications 1 à 20, caractérisé en ce qu'il est formé par un réseau d'agents en forme d'une pyramide dont le sommet constituant le niveau n est formé par un agent maître auquel est associé un certain nombre d'agents fils formant le niveau n-1, chaque agent fils pouvant être un agent maître d'un certain nombre d'agents fils constituant un niveau inférieur, la base de la pyramide étant formée par des agents analyseurs dont chacun est pourvu d'un certain nombre d'agents cognitifs créateurs d'objets de connaissance.

22. Système selon la revendication 21, caractérisé en ce qu'il comporte au moins un utilisateur individuel formant un gestionnaire de connaissances individuelles IKM.

23. Système selon la revendication 21 ou 22, caractérisé en ce qu'il comprend plusieurs utilisateurs en réseau qui constituent une collectivité comportant plusieurs gestionnaires de connaissances individuelles constituant des agents fils d'un agent maître de la collectivité, l'ensemble constituant un gestionnaire de connaissances collectives CKM.

24. Système selon la revendication 23, caractérisé en ce qu'il comprend plusieurs gestionnaires de connaissances collectives constituant des agents fils d'un agent maître d'une organisation de collectivités, l'ensemble constituant un gestionnaire de connaissances communautaires.
